Europäisches Patentamt

(19) European Patent Office

Office européen des brevets

(11) Numéro de publication: **0 078 355**
**B1**

(12) **FASCICULE DE BREVET EUROPEEN**

(45) Date de publication du fascicule du brevet: **31.07.85**

(21) Numéro de dépôt: **81430035.6**

(22) Date de dépôt: **28.10.81**

(51) Int. Cl.⁴: **H 04 Q 3/00,** H 04 M 3/40,
H 04 M 19/00

(54) **Circuit d'interface comportant des moyens d'adaptation d'impédance.**

(43) Date de publication de la demande:
**11.05.83 Bulletin 83/19**

(45) Mention de la délivrance du brevet:
**31.07.85 Bulletin 85/31**

(84) Etats contractants désignés:
**DE FR GB IT**

(56) Documents cités:
**EP-A-0 022 561**
**EP-A-0 048 477**
**DE-A-2 739 778**

**IEEE JOURNAL OF SOLID-STATE CIRCUITS,
vol. 5c-16, no. 4, aoÛt 1981, NEW YORK (US),
D.W. AULL et al.: "A high-voltage IC for a
transformerless trunk and subscriber line
interface", pages 261-266**

(73) Titulaire: **International Business Machines
Corporation
Old Orchard Road
Armonk, N.Y. 10504 (US)**
(84) **DE GB IT**

(73) Titulaire: **Compagnie IBM FRANCE
5 Place Vendôme
F-75000 Paris 1er (FR)**
(84) **FR**

(72) Inventeur: **Ballatore, Daniel
Le Figueret Pont du Loup
F-06620 Bar Sur Loup (FR)**
Inventeur: **Bonnet, Yves Aimé Jean José
Villa Jo-Aimée 135 Avenue H. Brun
F-06700 Saint Laurent Du Var (FR)**
Inventeur: **Ferry, Michel François Marie
Stéphane
52 Allée des Micocouliers Hameau de
Puissanton
F-06220 Vallauris (FR)**
Inventeur: **Jacquart, Christian Augustin Bernard
1600 Chemin de Provence
F-06510 Gattieres (FR)**

Courier Press, Leamington Spa, England.

(74) Mandataire: **Tubiana, Max**
**Compagnie IBM France Département de**
**Propriété Industrielle**
**F-06610 La Gaude (FR)**

2

**Description**

Domaine Technique

La présente invention concerne les circuits d'interface entre un dispositif central et des terminaux éloignés, applicables notamment à la téléphonie.

Etat de la Technique

Il existe de nombreux systèmes dans lesquels des terminaux sont reliés à une unité centrale au travers de lignes de transmission plus ou moins longues. Le bon fonctionnement de ces systèmes exige qu'un soin tout particulier soit apporté au réglage d'un certain nombre de paramètres tels que notamment les impédances vues au point de connexion de la ligne au système central. La présente invention fournit des moyens extrêmement souples de réglage desdites impédances, moyens applicables notamment à la téléphonie.

Les systèmes téléphoniques comportent des unités centrales (centraux téléphoniques privés ou publics) auxquelles sont reliés les postes d'abonnés au travers de lignes bifilaires téléphoniques. Quel que soit l'éloignement de l'abonné par rapport au central, autrement dit quelle que soit la longueur de la ligne correspondante, l'impédance en alternatif vue à partir du central (impédance dite de ligne) doit être relativement constante et égale à une valeur prédéterminée. Cette valeur est en général fixée par réglementation nationale ou internationale. Il est particulièrement utile que le système téléphonique soit conçu pour disposer de moyens permettant d'ajuster les impédances de ligne d'une installation donnée à une valeur normalisée et ce, quelle que soit la norme. Ces moyens sont en général placés dans des circuits d'interface reliant la ligne bifilaire au central téléphonique correspondant.

Le central téléphonique doit en outre fournir des courants continus de polarisation aux postes d'abonnés, courants qui doivent eux aussi être réglés à des valeurs normalisées. Les circuits d'interface des systèmes téléphoniques classiques utilisent pour ce faire, des sources de tensions continues reliées aux lignes téléphoniques par des éléments dits alimenteurs. Pour éviter les dissipations d'énergie dans ces alimenteurs, on a déjà proposé dans la demande de brevet français No. 76 30658 publiée le 16 juin 1978 sous le No. 2 371 840, un circuit alimenteur non dissipatif. Ce circuit, utilisé dans la présente invention (voir préambule de la revendication 4), permet d'obtenir de très bons résultats en "simulant" une impédance prédéterminée en courant continu. Mais il ne permet pas de régler à la fois l'impédance de ligne et les courants de polarisation. Autrement dit, il ne permet pas de simuler à la fois des impédances continues et alternatives dans un circuit d'interface entre une unité centrale et une ligne de transmission.

La demande de brevet européen EP—A— 0022561 illustrant le préambule de la revendication 1 de la présente invention décrit un circuit d'interface pour ligne téléphonique simulant lui aussi une impédance prédéterminée en courant continu. Cette simulation comporte une mesure des variations du courant circulant dans la ligne téléphonique, une amplification desdites variations et une addition de l'information ainsi amplifiée au signal à transmettre sur la ligne téléphonique. Ce dispositif non plus ne permet pas de simuler à la fois des impédances continues et alternatives.

Exposé de l'Invention

La présente invention a pour objet un circuit d'interface placé entre une unité centrale et une ligne de transmission et possédant des moyens permettant d'ajuster aussi bien en continu qu'en alternatif les impédances vues aux points de liaison de la ligne à l'unité centrale.

Plus précisément, la présente invention a pour objet un circuit d'interface entre un central téléphonique et une ligne téléphonique bifilaire reliée à un poste téléphonique d'abonné, ligne destinée notamment à véhiculer à la fois l'information BF d'origine vocale à transmettre du central audit poste et celle reçue dudit poste, ledit circuit d'interface comportant des moyens d'adaptation pour ajuster les impédances vues par la ligne téléphonique à ses points de liaison au central, à des valeurs prédéterminées lesdits moyens d'adaptation comportant: des moyens de mesure reliés à la ligne téléphonique et destinés à mesurer les variations du courant circulant dans ladite ligne téléphonique; des premiers moyens d'amplification de gain Al($\omega$) reliés auxdits moyens de mesure et fournissant un signal amplifié; des moyens d'addition reliés auxdits premiers moyens d'amplification pour additionner ledit signal amplifié à l'information BF à transmettre sur ladite ligne téléphonique vers le poste téléphonique d'abonné; et, des seconds moyens d'amplification de gain A2($\omega$) reliés auxdits moyens d'addition et attaquant ladite ligne téléphonique; ledit circuit d'interface étant caractérisé en ce que lesdits gains Al($\omega$) et A2($\omega$) sont choisis de manière à assurer auxdites impédances vues par la ligne téléphonique des valeurs prédéterminées en fonction de la fréquence, valeurs sensiblement proportionnelles au produit Al($\omega$) . A2($\omega$).

La présente invention a encore pour objet un circuit d'interface entre une ligne téléphonique bi-directionnelle destinée à véhiculer notamment des signaux vocaux BF, et un réseau de commutation téléphonique relié audit circuit d'interface à travers une première et une seconde lignes mono-directionnelles, ledit circuit d'interface étant pourvu de moyens pour ajuster l'impédance vue par ladite ligne téléphonique, et comportant: un transformateur HF ayant un primaire pourvu de deux extrémités et d'un point milieu, et un secondaire; des moyens pour relier ledit secondaire à ladite ligne mono-directionnelle à travers un circuit redresseur; des moyens pour relier respectivement les extrémités dudit primaire à un premier et un second commutateurs alternativement commutés à un rythme HF prédéterminé; une impédance reliant en commun lesdits commutateurs à la masse; des premiers moyens d'amplification de gain Al(ω) reliés à ladite impédance; une moyens d'addition reliés auxdits premiers moyens d'amplification et à ladite première ligne mono-directionnelle; des seconds moyens d'amplification de gain A2(ω) reliés auxdits moyens d'addition et attaquant ledit point milieu; et des moyens pour relier ledit point milieu à ladite seconde ligne mono-directionnelle; ledit circuit d'interface étant caractérisé en ce que lesdits gains Al(ω) et A2(ω) variables en fonction de la fréquence sont en outre réglables de manière à assurer un produit Al(ω) . A2(ω) sensiblement proportionnel à l'impédance à ajuster, dans une gamme de fréquences prédéterminée.

D'autres objets, caractéristiques et avantages de la présente invention ressortiront mieux de l'exposé qui suit, fait en référence aux dessins annexés à ce texte, qui représentent un mode de réalisation préféré de celle-ci.

## Description des Figures

Figure 1 représente un schéma de principe général d'un central téléphonique.

Figure 2 est un circuit d'interface selon l'invention.

Figure 3 représente un schéma de principe du circuit d'interface selon l'invention.

Figure 4 est un élément du circuit de la figure 2.

Figure 5 est un schéma détaillé d'un mode de réalisation du circuit d'interface de l'invention.

## Description Détaillée de l'Invention

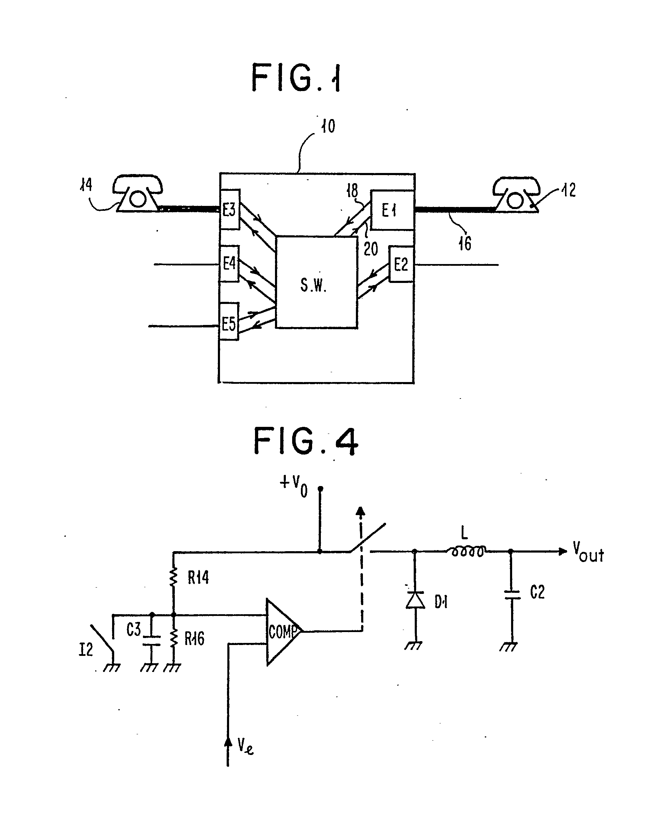

La figure 1 montre, de manière très schématique, les différents éléments d'un central téléphonique 10 auquel sont rattachés des postes téléphoniques d'abonnés 12, 14, etc.

Le central comporte un réseau de commutation SW et des circuit d'interface E1, E2,.... Ces circuits d'interface sont plus précisément appelés circuits d'extension ou troncs selon que le central auquel ils appartiennent est du type privé (PBX) ou public (CX). Bien que la présente invention puisse s'appliquer aussi bien à l'un qu'à l'autre type de central téléphonique, elle sera plus précisément décrite ici en relation avec un central téléphonique privé. Le poste d'abonné 12 est relié à un circuit d'interface (E1) à travers une ligne téléphonique bi-directionnelle bifilaire 16. La ligne 16 assure notamment le transfert de l'information d'origine vocale, du poste téléphonique d'abonné vers le central et inversement. Cette information occupe une gamme de fréquences basses (BF), dite gamme téléphonique s'étendant environ de 300 à 3000 ou 3500 Hz, par exemple.

L'information BF arrivant du poste téléphonique sur une voie unique 16 transite en général entre circuit d'extension et réseau de commutation sur deux voies séparées 18 et 20. On parle alors couramment de transformation deux fils/quatre fils pour traduire la conversion de la ligne bifilaire bidirectionnelle 16 en les deux voies (lignes) monodirectionnelles séparées 18 et 20.

Le réseau de commutation SW est chargé d'établir les connexions électriques nécessaires pour établir la liaison entre un poste d'abonné et celui de son correspondant, donc entre deux circuits d'interface.

Dans le cas d'une installation téléphonique du type à réseau privé, le central fournit aussi aux postes d'abonnés des courants alternatifs et continus destinés notamment à assurer respectivement l'appel de l'abonné demandé et l'alimentation des microphones des postes d'abonnés en service. Ces courants sont en général engendrés dans chaque circuit d'extension pour l'abonné rattaché à l'interface auquel appartient ledit circuit.

De nombreux paramètres tels que notamment les longueurs et qualités des lignes (par exemple, la ligne Lg peut être pupinisée ou non pupinisée) peuvent avoir une incidence sur le bon fonctionnement de l'installation téléphonique. En outre, certaines caractéristiques de l'installation sont fixées par des réglementations nationales et/ou internationales. C'est le cas des impédances vues aux points de connexions de chaque ligne bifilaire d'abonné au central téléphonique 10. D'où l'intérêt pour le constructeur de matériel téléphonique de prévoir des moyens d'adaptation relativement simples permettant d'ajuster chacune desdites impédances quelles que soient les conditions imposées à l'installateur du central téléphonique. Ces moyens d'ajustage doivent permettre de régler à la fois l'impédance en courant continu ou du moins dans la gamme de fréquence inférieures à 300 Hz, et l'impédance en alternatif dans la gamme 300—3000 Hz environ, impédances vues aux points de connexion de la ligne bifilaire telle que 16 au central téléphonique 10. La présente invention, fournit au sein du circuit d'interface tel que E1, des moyens pour ajuster simplement les impédances vues à l'entrée du central téléphonique 10, c'est-à-dire aux points de connexion du central avec la ligne 16. Lesdits moyens d'ajustage proposés, s'appliquent à de nombreux types de circuits d'interface. Ils seront cependant décrits ici plus en détail dans le cadre de leur application au circuit d'interface décrit dans le brevet français No. 76 30658 déjà cité.

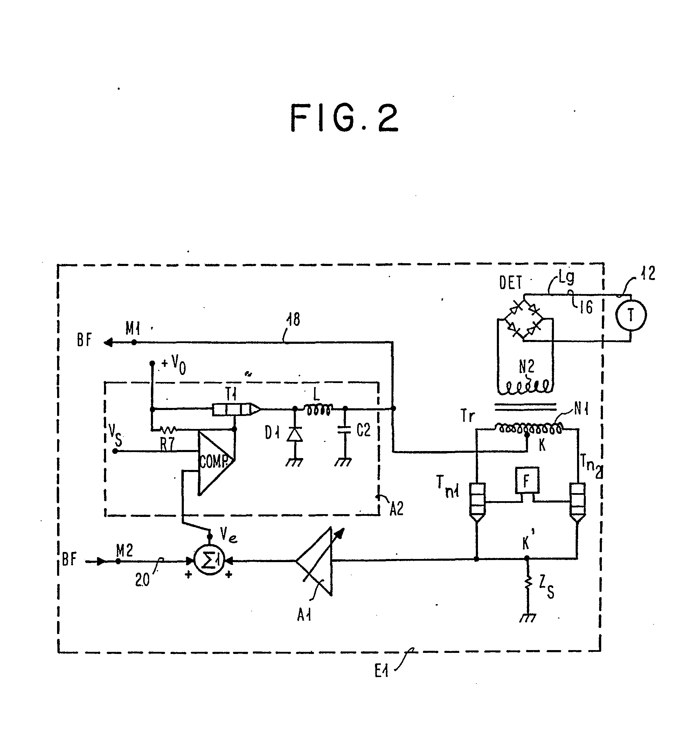

La figure 2 de la présente demande reprend certains éléments de la figure 2 de la demande de brevet français citée cidessus, éléments pour lesquels on utilisera ici les mêmes références. On désigne par T le poste téléphonique 12, par Lg la ligne téléphonique 16 reliant le poste téléphonique T au central à travers le circuit d'interface désigné par E1. Le circuit d'interface comporte un transformateur hautes fréquences (Tr) ayant un enroulement primaire N1 dont les extrémités sont reliées à la masse à travers des commutateurs à transistors $T_{n1}$ et $T_{n2}$. Les transistors $T_{n1}$ et $T_{n2}$ sont alternativement rendus conducteurs à un rythme haute fréquence, par une bascule astable F. L'enroulement secondaire N2 du transformateur Tr est relié à la ligne téléphonique Lg à travers un circuit détecteur DET comportant un pont redresseur. Le point milieu K du primaire N1 du transformateur Tr est relié à une source de tension Vo à travers un circuit de commutation qui comme on le verra plus loin pour la présente invention, joue le rôle d'un amplificateur A2. En supposant la tension Vo transmise au point milieu K, la fermeture alternative des commutateurs $T_{n1}$ et $T_{n2}$ permet d'engendrer une onde porteuse HF, laquelle est modulée par l'onde vocale BF apparaissant en K et qui, soit provient du poste téléphonique T, et est orientée vers le réseau de commutation SW par la ligne 18, soit lui est destinée et provient du réseau SW à travers la ligne 20. Pour plus de détails sur les phénomènes mis en jeu ici, à savoir transmission de la BF du poste d'abonné 12 vers le réseau de commutation SW et vice-versa, par utilisation des phénomènes de modulation d'une porteuse HF, on se reportera au brevet français cité plus haut. On précise aussi dans ce même brevet que pour que le signal BF ne se perde en tout ou partie dans la source de tension Vo, il faut assurer le blocage de ce signal BF vers la source Vo. Cette fonction est dévolue à un circuit de blocage BF schématisé sur la figure 2 de la demande de brevet précitée par une impédance Zo.

Le circuit d'interface doit en outre permettre la fourniture à la ligne des courants continus mentionnés plus haut. Il doit permettre aussi le réglage de ces courants. On a montré dans la demande de brevet précitée (voir figures 6 et 7 dudit brevet) comment on pouvait utiliser à cet effet la source de tension Vo débitant dans un circuit non dissipatif. Dans le brevet cité, ce circuit assure l'alimentation de la ligne Lg en continu. Il ne permet cependant pas de régler simplement l'impédance ramenée aux bornes de la ligne téléphonique 16. La présente invention au contraire fournit un circuit d'adaptation permettant d'ajuster l'impédance vue aux bornes de la ligne téléphonique 16 en fonction des besoins spécifiques du client aussi bien pour les signaux BF se situant dans la gamme de fréquences téléphoniques, qu'en continu. Elle permet en outre de réaliser les fonctions d'alimentation, quels que soient les critères spécifiques imposés sur le lieu d'installation du central téléphonique 10.

Les émetteurs des transistors $T_{n1}$ et $T_{n2}$ ont ici été reliés à la masse à travers une résistance $Z_S$. Le signal de tension apparaissant aux bornes de $Z_S$ (ou entre le point K' et la masse) traduit les variations du courant circulant dans la ligne 16. Ce signal est amplifié par un premier amplificateur A1 à gain variable en fonction de la fréquence. La sortie de l'amplificateur A1 est ici reliée à un circuit d'addition $\Sigma1$ recevant par ailleurs le signal BF en provenance du réseau de commutation SW (ligne 20). La sortie de $\Sigma1$ est envoyée sur l'une des entrées d'un comparateur COMP dont la seconde entrée reçoit un signal en dents de scie $V_S$. Ce comparateur COMP appartient à un second amplificateur A2 destiné à amplifier le signal fourni par le circuit d'addition $\Sigma1$ comme on le verra plus loin. L'amplificateur A2 comporte en outre une cellule en π semblable à celle qui était utilisée dans la demande de brevet précitée comportant une diode D1, une inductance L et un condensateur C2. Ladite cellule en π est alimentée par une source de tension +Vo à travers un interrupteur à transistor T1 dont l'ouverture est contrôlée par la sortie du comparateur COMP. La sortie de la cellule en π est reliée au point milieu K du primaire du transformateur Tr. De ce même point K part aussi la ligne 18 vers le réseau de commutation SW.

Compte tenu des propriétés des transformateurs, on peut considérer que l'impédance de la ligne téléphonique Lg est ramenée aux points KK'. Pour simplifier, on supposera le rapport de transformation du transformateur Tr égal à l'unite. C'est donc aux points KK' que l'on considérera les impédances à ajuster (impédances vues par la ligne, à l'entrée du circuit d'interface) de manière à ce qu'elles soient, aussi bien en continu qu'en alternatif, conformes aux normes. Dans la plupart des cas, il suffira en fait d'ajuster les impédances vues entre les points KK' à une valeur donnée pour la bands de fréquences inférieures à 300 Hz et à une autre valeur donnée pour la gamme de fréquences allant de 300 à 3000 ou 3500 Hz.

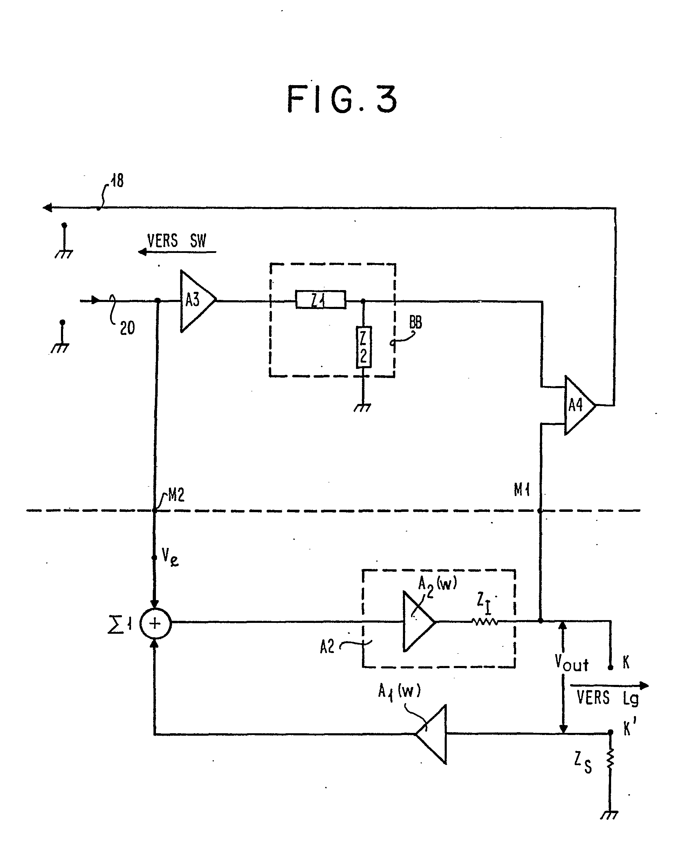

La partie inférieure de la figure 3 représente un schéma de principe équivalent au schéma de la figure 2. On y a représenté l'ensemble A2 par un amplificateur de gain $A2(\omega)$. L'utilisation du symbole $\omega$ est destinée à signaler le fait que le paramètre auquel on l'associe varie en fonction de la fréquence. L'amplificateur A2 débite dans une impédance $Z_I$. Si on désigne par $Z_T(\omega)$ l'impédance du circuit d'interface vue par la ligne téléphonique, on peut écrire:

$$Z_T = [A1(\omega) \times A2(\omega) + 1]Z_z + S_I \qquad (1)$$

si

$$AI(\omega) \times A2(\omega) \gg 1 \text{ et } Z_I \gg A1(\omega) . A2(\omega) . Z_s$$

on obtient:

$$Z_T(\omega) = A1(\omega) . A2(\omega) . Z_S \qquad (2)$$

L'impédance $Z_T$ est donc sensiblement proportionnelle à $A1(\omega) . A2(\omega)$.

On constate aussi qu'en jouant sur les gains $A1(\omega)$ et/ou $A2(\omega)$ en fonction de la fréquence on a la possibilité de faire varier $Z_T$, donc l'impédance vue par la ligne à l'entrée du circuit d'interface. Compte tenu de la formule (2), on peut considérer que le circuit d'interface décrit jusqu'ici est équivalent à une source de tension $A2(\omega)$. Ve débitant dans l'impédance série $Z_T$, l'ensemble étant placé entre les points K et K'. Ce qui fait qu'en pratique l'installateur du central 10 n'aura qu'à régler A1 et/ou A2 pour ajuster $Z_T$ de manière telle que $Z_T$ soit conforme aux normes à respecter. Qui plus est, on peut commander le circuit d'interface E1 pour procéder à des ajustements d'impédance $Z_T$ à des valeurs normalisées en fonction de la fréquence. On peut, notamment ajuster séparément les impédances en continu (plus généralement aux fréquences inférieures à 300 Hz) et en alternatif (entre 300 et 3500 Hz). Par exemple on pourra ajuster l'impédance à 600 $\Omega$ dans la gamme 300—3500 Hz et à 800 $\Omega$ dans la gamme 0—300 Hz. On peut noter que dans la pratique il n'y aura pas de saut brusque d'impédance à 300 Hz, mais une zone de transition.

Si on désigne par $V_{out}$ la tension de sortie du circuit A2, c'est-à-dire la tension aux bornes C2, on a:

$$A2(\omega) = \frac{V_{out}}{V_e}$$

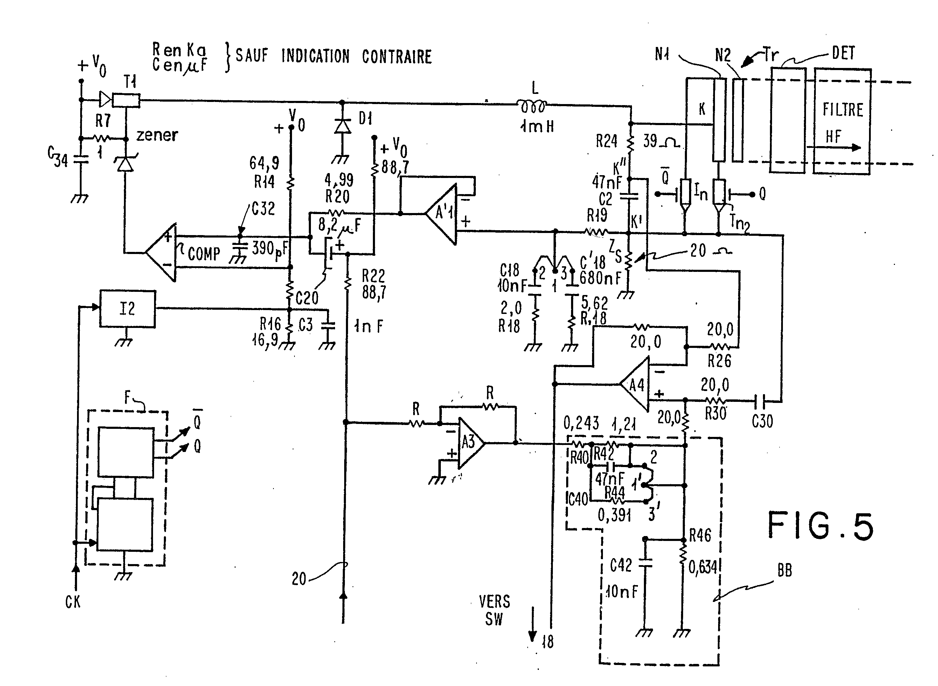

$V_e$ étant la tension fournie par l'additionneur $\Sigma1$ à l'entrée de A2, et $V_{out}$ la sortie, selon la figure 4.

En fait, le comparateur COMP effectue la comparaison des tensions $V_e$ et $V_s$, ($V_s$ étant une tension en dents de scie d'amplitude de crête $V_{s\ max}$) et délivre un signal logique commandant les ouvertures et fermetures du commutateur à transistor T1. La tension continue $+V_o$ est donc appliquée à la cellule en $\pi$ (D1, L, C2) au rythme de ces fermetures.

En désignant par $Z_{C2}$ et $Z_L$ les impédances respectives de C2 et L en fonction de la fréquence, on peut écrire:

$$A2(\omega) = \frac{V_{out}}{V_e} = \frac{V_o}{V_{s\ max}} \times \frac{Z_{C2}}{Z_L + Z_{C2}} \quad (3)$$

On a donc la possibilité de commander le gain $A2(\omega)$ en jouant sur l'un ou plusieurs des paramètres figurant dans l'expression (3) ci-dessus. En pratique, il est souvent suffisant de pouvoir régler $A2(\omega)$ pour qu'il ait une valeur entre 0 et 300 Hz et une autre entre 300 et 3000 ou 3500 Hz. On peut notamment jouer sur l'amplitude $V_{s\ max}$ de la tension $V_s$ pour obtenir le résultat recherché.

La formule (3) montre aussi la sensibilité du gain $A2(\omega)$ aux fluctuations parasites (bruits) de la source de tension $V_o$ et/ou de $V_{s\ max}$. Cette sensibilité est minimisés en rendant $V_s$ dépendant de $V_o$. C'est ce que montre la figure 4 où le circuit (R14, R16, C5 et I2), assure la réalisation de la tension $V_s$.

La formule (2) montre notamment que si l'on maintient $A2(\omega) = G$ constant, le circuit d'interface se comporte, comme une source de tension $GV_e$ en série avec une impédance $Z_T$ et débitant directement dans la ligne Lg. Dans ce cas il n'y a aucune distorsion de $V_e$ en fonction de la fréquence. $Z_T$ peut être réglé à la (ou aux) valeur(s) désire(s) en jouant sur G et/ou sur $A1(\omega)$.

$$Z_T \simeq G.A1(\omega).Z_s$$

Il est à noter que la notion d'amplification de $A1(\omega)$ et $A2(\omega)$ est à prendre ici au sens large englobant aussi bien l'amplification que l'atténuation. Autrement dit les gains $A1(\omega)$ et/ou $A2(\omega)$ peuvent être supérieurs ou inférieurs à l'unité.

D'autre part, comme le montre la figure 1, tandis que la liaison entre l'interface E1 et le combiné téléphonique 12 est faite sur deux fils (ligne 16), celle entre E1 et le réseau de commutation souvent est faite sur quatre fils (lignes 18 et 20). Le circuit d'interface décrit jusqu'ici se prête particulièrement bien à cette fonction de conversion deux fils/quatre fils. Pour ce faire, on utilise le circuit dont le schéma de principe est représenté sur la partie supérieure de la figure 3. La ligne 20 reliant le réseau de commutation SW au circuit d'interface est reliée au circuit d'addition $\Sigma1$ et lui fournit la tension basse fréquence (BF) désignée par $V_e$. Le point K est relié à l'entrée d'un amplificateur différentiel de retour A4, dont la seconde entrée est reliée à la ligne 20 à travers un circuit d'équilibrage BB et l'amplificateur A3. La sortie de l'amplificateur A4 attaque la ligne 18 allant vers le réseau de commutation SW. On montre que l'installation peut être équilibrée de manière à permettre une séparation convenable des signaux du convertisseur deux fils/quatre fils, dans les conditions suivantes en particulier:

$$Z1 = k(Z_T - Z_s) \simeq k\ Z_t$$

$$Z2 = k(Z_L + Z_s) \simeq k\ Z_L$$

$$A3 = A2$$

où $Z_L$ est l'impédance de la ligne Lg ramenée aux bornes KK'.

En pratique $Z_L \gg Z_s$.

On a déjà vu que l'on pouvait ajuster $Z_T$ à partir de gains $AI(\omega)$ et/ou $A2(\omega)$. On peut aussi ajuster d'autres paramètres tels que ceux du circuit d'équilibrage BB. Ces ajustages peuvent se faire notamment par de simples commutations d'éléments de circuits. D'où une très grande souplesse pour adapter le circuit d'interface proposé, aussi bien aux normes imposées dans chaque pays, qu'aux conditions spécifiques à l'équipement de chaque client d'un même pays (type de lignes, leurs qualités, etc.).

La figure 5 représente un schéma du circuit d'interface groupant les éléments des figures précédentes lesquels peuvent aisément être identifiés par leurs références. On notera cependant quelques modifications de détails n'ayant pratiquement pas d'incidence sur le principe de fonctionnent du circuit d'interface tel que décrit jusqu'ici.

L'entrée de l'amplificateur A1 a été pourvue de circuits à résistances et capacités (C18—R18 et C'18—R'18) permettant d'ajuster certaines impédances par de simples opérations de commutation de circuits. Notamment, on peut régler l'amplificateur désigné ici par A1 pour qu'il isole le point K' de l'entrée non inverseuse de COMP dans la gamme de fréquence 300—3500 Hz. Et dans ce cas, on placera, les impédances désirées au point K, notamment en reliant les points 1 et 2 et/ou 1 et 3. Par exemple en reliant 1 et 2 on ramène 600 Ω au point K, tandis qu'en reliant 1 et 3 on ramène une ature impédance prédéterminée fixée selon les normes d'un pays donné. L'ensemble (A'1, R19, C18, R18, C'18 et R'18) joue donc ici le rôle de l'amplificateur A1(ω) dont on peut regler le gain en fonction de la fréquence en agissant sur les valeurs des éléments autres que A'1.

La sortie de l'amplificateur A'1 attaque l'entrée non inverse du comparateur COMP à travers une résistance R20. La ligne 20 attaque aussi cette même entrée du comparateur COMP à travers un circuit comportant une résistance R22 en série avec un condensateur C20. L'ensemble R20, C20, R22 attaquant COMP réalise une fonction d'addition (le condensateur C32 placé sur l'entrée non inverseuse du comparateur COMP sert uniquement au filtrage du signal appliqué, filtrage destiné à supprimer des signaux parasites éventuels). Cet ensemble constitue donc l'additionneur désigné plus haut par Σ1. On retrouve sur ce schéma les éléments (R14, R16, C3 et I2) associés au comparateur COMP pour réaliser les fonctions décrites en relation avec la figure 4.

La diode Zener et le condensateur C34 rajoutés aux bornes de la résistance R7 n'ont pas d'incidence directe sur le principe de fonctionnement du dispositif constituant l'amplificateur A2. La diode Zener permet une adaptation du niveau de tension à la sortie du comparateur COMP. L'interrupteur I2 et la bascule F sont synchronisés par une même horloge CK (non représentée). Autrement dit, la tension $V_S$ en dents de scie est synchronisée sur l'onde porteuse HF. Le signal BF en provenance du réseau de commutation SW est envoyé sur l'amplificateur A3 et sur le circuit d'addition Σ1. La sortie de A3 attaque le circuit d'équilibrage BB comprenant des circuits à résistances (R40, R42, R44, R46) et condensateurs (C40, C42), circuits qui peuvent être connectés de diverses manières pour équilibrer l'installation selon les besoins, notamment en plaçant un court-circuit entre les points 1' et 2' et/ou 1' et 3'. La sortie du circuit d'équilibrage BB attaque l'entrée non inverseuse de l'amplificateur différentiel A4, entrée reliée aussi au point K' à travers un circuit série à résistance et capacité (R30—C30). La seconde entrée de A4 est reliée au point milieu K du transformateur HF Tr à travers des résistances R24 et R26. Il y a donc une légère modification par rapport au schéma de la figure 3, à savoir que le signal BF reçu est appliqué aux entrées de l'amplificateur A4, donc de manière différentielle.

La sortie de l'amplificateur A4 est envoyée vers le réseau de commutation SW par l'intermédiaire de la ligne 18.

On notera que sur la figure 5 la sortie du transformateur Tr, après avoir été démodulée par le pont de diodes DET est filtrée vis-à-vis du signal porteur (HF), ce qui introduit une impédance supplémentaire dont on a tenu compte pour calculer $Z_T$. Pour le mode de réalisation représenté sur la figure 5, les valeurs de $Z_T$ synthétisées correspondent à une résistance pure quand les points 1 et 2 sont court-circuités, et à une ligne de 5/10 d'environ 2,5 km fermée sur 950 Ω quand 1 et 3 sont court-circuités.

**Revendications**

1. Circuit d'interface entre un central téléphonique (10) et une ligne téléphonique bifilaire (16) reliée à un poste téléphonique d'abonné, ligne destinée notamment à véhiculer à la fois l'information BF d'origine vocale à transmettre du central audit poste et celle reçue dudit poste, ledit circuit d'interface comportant des moyens d'adaptation pour ajuster les impédances vues par la ligne téléphonique à ses points de liaison au central, à des valeurs prédéterminées lesdits moyens d'adaptation comportant:

des moyens de mesure (Zs) reliés à la ligne téléphonique et destinés à mesurer les variations du courant circulant dans ladite ligne téléphonique;

des premiers moyens d'amplification de gain A1(ω) reliés auxdits moyens de mesure et fournissant un signal amplifié;

des moyens d'addition (Σ1) reliés auxdits premiers moyens d'amplification pour additionner ledit signal amplifié à l'information BF à transmettre sur ladite ligne téléphonique vers le poste téléphonique d'abonné; et,

des seconds moyens d'amplification de gain A2(ω) reliés auxdits moyens d'addition et attaquant ladite ligne téléphonique;

ledit circuit d'interface étant caractérisé en ce que lesdits gains A1(ω) et A2(ω) sont choisis de manière à assurer auxdites impédances vues par la ligne téléphonique des valeurs prédéterminées en fonction de la fréquence, valeurs sensiblement proportionnelles au produit A1(ω) . A2(ω).

2. Circuit d'interface selon la revendication 1 caractérisé en outre en ce que:

lesdits premiers et/ou seconds moyens d'amplification comportent des moyens de réglage de leur gain en fonction de la fréquence (A'1, R19, C18, R18, C'18, R'18; C2,BB);

lesdits gains A1(ω) et/ou A2(ω) étant choisis de manière telle que le produit A1(ω . A2(ω) soit pour une gamme de fréquence donnée sensiblement proportionnel à l'une au moins desdites valeurs prédéterminées.

3. Circuit d'interface selon la revendication 2 caractérisé en ce que lesdits moyens de réglage de gain permettent d'ajuster séparément les gains dans la gamme de fréquences dites téléphoniques et dans la gamme de fréquences inférieures à ladite gamme téléphonique.

4. Circuit d'interface entre une ligne téléphonique (Lg) bi-directionnelle destinée à véhiculer notamment des signaux vocaux BF, et un réseau de commutation téléphonique (SW) relié audit circuit d'interface à travers une première (20) et une seconde (18) lignes mono-directionnelles, ledit circuit d'interface étant pourvu de moyens pour ajuster l'impédance ($Z_T$) vue par ladite ligne téléphonique, et comportant:

un transformateur HF (Tr) ayant un primaire (N1) pourvu de deux extrémités et d'un point milieu K, et un secondaire (N2);

des moyens pour relier ledit secondaire à ladite ligne mono-directionnelle à travers un circuit redresseur (DET);

des moyens pour relier respectivement les extrémités dudit primaire à un premier et un second commutateurs alternativement commutés à un rythme HF prédéterminé;

une impédance $Z_s$ reliant en commun lesdits commutateurs à la masse;

des premiers moyens d'amplification de gain A1($\omega$) reliés à ladite impédance;

des moyens d'addition ($\Sigma1$) reliés auxdits premiers moyens d'amplification et à ladite première ligne mono-directionnelle (20);

des seconds moyens d'amplification de gain A2($\omega$) reliés auxdits moyens d'addition et attaquant ledit point milieu, et

des moyens pour relier ledit point milieu à ladite seconde ligne mono-directionnelle (18);

ledit circuit d'interface étant caractérisé en ce que lesdits gains A1($\omega$) et A2($\omega$) variables en fonction de la fréquence sont en outre réglables de manière à assurer un produit A1($\omega$) . A2($\omega$) sensiblement proportionnel à $Z_T$ dans une gamme de fréquence prédéterminée.

5. Circuit d'interface selon la revendication 4 caractérisé en ce que lesdits seconds moyens d'amplification comportent:

une source de tension continue (Vo);

une cellule en $\pi$ dont la branche horizontale comporte une inductance (L) et les branches verticales comportent respectivement une diode (D1) et un condensateur (C2), ladite cellule en $\pi$ étant reliée audit point milieu;

des moyens de commutation (T1, R7) placés en série entre ladite source de tension continue et ladite cellule en $\pi$;

une source de tension en dents de scie ($V_s$) d'amplitude prédéterminée en fonction du gain A2($\omega$); et

des moyens de commande comportant un comparateur à deux entrées dont l'une est reliée à ladite source de tension en dents de scie, et l'autre est reliée à la sortie desdits moyens d'addition, la sortie dudit comparateur commandant les ouvertures et fermetures desdits moyens de commutation.

6. Circuit d'interface selon la revendication 5 caractérisé en ce que ladite source de tension en dents de scie comporte un circuit à résistance capacité (R14, R16, C3, I2) relié à ladite source de tension continue.

7. Circuit d'interface selon l'une des revendications 4 à 6 caractérisé en ce qu'il comporte en outre des moyens pour relier le circuit d'interface au réseau de commutation comportant:

des moyens d'équilibrage;

des troisièmes moyens d'amplification (A3) dont l'entrée est reliée au réseau de commutation à travers ladite première ligne mono-directionnelle et dont la sortie est reliée auxdits moyens d'équilibrage (Z1, Z2); et

des quatrièmes moyens d'amplification (A4) ayant deux entrées dont l'une est reliée auxdits moyens d'équilibrage et l'autre est reliée audit point milieu, la sortie desdits quatrièmes moyens d'amplification étant reliée audit réseau de commutation à travers ladite seconde ligne mono-directionnelle.

8. Circuit d'interface selon l'une des revendications 5 à 7 caractérisé en en ce qu'il comporte en outre des moyens pour synchroniser ladite tension en dents de scie sur ledit rythme HF prédéterminé.

**Patentansprüche**

1. Teilnehmerschaltung zwischen einer Vermittlungszentrale (10) und einer bifilaren mit einem Telephonanschluss verbundenen Telephonleitung (16), wobei diese Leitung dazu besonders bezweckt ist, beide die stimmhafte von der Vermittlungszentrale zu dem Telephonanschluss zu Übertragende Nachricht BF und die von dem Telephonanschluss empfangene Nachricht zu befördern, wobei die Teilnehmerschlaltung Anpassungsmittel zur Einstellung der an den Verbindungsstellen mit der Vermittelungszentral von der Telephonleitung gesehen erscheinenden Impedanzen auf vorbestimmte Werte aufweist, wobei die Anpassugnsmittel einschliessen:

Messungsmittel (Zs), die mit der Telephonleitung verbunden sind und dazu bezweckt sind, die Schwankung des durch die Telephonleitung durchfliessenden Stromes zu messen;

erste Verstärker mit einem Verstärkungsgrad A1($\omega$), die mit den Messungsmitteln verbunden sind und ein verstärktes Signal abgeben;

Addiermittel ($\Sigma1$), die mit den ersten Verstärkern zum Addieren des verstärktes Signals zu der über die Telephonleitung an den Telephonanschluss zu Übermittelnden Nachricht BF verbunden sind; und,

zweite Verstärker mit einem Verstärkungsgrad A2($\omega$), die mit den Addiermitteln verbunden sind und die Telephonleitung erregen;

wobei die Teilnehmerschaltung dadurch gekennzeichnet, dass die Verstärkungsgrade A1($\omega$) und A2($\omega$) derart gewählt sind, dass den Impedanzen vorbestimmte und dem Produkt A1($\omega$) . A2($\omega$) etwa proportionalen Werte in Abhängigkeit von der Frequenz zugeordnet sind.

2. Teilnehmerschaltung nach Anspruch 1, dadurch weiterhin gekennzeichnet, dass:

die ersten und/oder zweiten Verstärker Glieder zur Einstellung deren jeweiligen Verstärkungsgrad in Abhängigkeit von der Frequenz (A'1, R19, C18, R18, C'18, R'18; C2, BB) aufweisen;

wobei die Verstärkungsgrade A1($\omega$) und/oder A2($\omega$) derart gewählt sind, dass der Produkt A1($\omega$) . A2($\omega$) bei einem bestimmten Frequenz-

bereich mindestens einem der vorbestimmten Werte etwa proportional ist.

3. Teilnehmerschaltung nach Anspruch 2, dadurch gekennzeichnet, dass die Einstellglieder für die Verstärkungsgrade es erlauben, getrennt die Verstärkungsgrade in dem Bereich der sogenannten Telephonfrequenzen und in dem Bereich der unter den Telephonfrequenzen liegenden Frequenzen einzustellen.

4. Teilnehmerschaltung zwischen einer zur Beförderung der stimmhaften Signale BF bezweckten Zweirichtungstelephonleitung (Lg) und einem Telephon-Vermittlungsnetz (SW), das mit der Teilnehmerschaltung über eine erste (20) und eine zweite (18) Einrichtungsleitung verbunden ist, wobei die Teilnehmerschaltung mit Mitteln zur Einstellung der Impedanz ($Z_T$) versehen ist, wobei sie einschliesst:

einen Transformator HF (Tr) mit einer Primärwicklung (N1), die mit zwei Enden und mit einem Mittelpunkt K versehen ist, und mit einer Sekundärwicklung (N2);

Mittel zum Verbinden der Sekundärwicklung mit der Einrichtungsleitung über einen Gleichrichter (DET);

Mittel zum Verbinden jeweils der Enden der Primärwicklung mit einem ersten und einem zweiten Umschalter, die abwechselnd einem vorbestimmten Tempo HF entsprechend geschaltet sind;

eine Impedanz $Z_s$, die die Umschalter mit der Erdung zusammenverbindet;

erste Verstärker A1($\omega$), die mit der Impedanz verbunden sind;

Addiermittel ($\Sigma 1$), die mit den ersten Verstärkern und mit der ersten Einrichtungsleitung (20) verbunden sind;

zweite Verstärker A2($\omega$), die mit den Addiermitteln verbunden sind und den Mittelpunkt erregen, und

Mittel zum Verbinden des Mittelpunktes mit der zweiten Einrichtungsleitung (18);

wobei die Teilnehmerschaltung dadurch gekennzeichnet ist, dass die in Abhängigkeit von der Frequenz wechselnden Verstärkungsgrade A1($\omega$) und A2($\omega$) weiterhin so einstellbar sind, dass ein zu $Z_T$ etwa proportionaler Produkt A1($\omega$) . A2($\omega$) bei einem vorbestimmten Frequenzbereich gesorgt ist.

5. Teilnehmerschaltung nach Anspruch 4, dadurch gekennzeichnet, dass die zweite Verstärker aufweisen:

eine Gleichstromquelle (Vo);

eine Zelle bei $\pi$, deren horizontale Zweig eine Induktanz (L) aufweist, und deren vertikale Zweige jeweils eine Diode (D1) und einen Kondensator (C2) aufweisen, wobei die Zelle bei $\pi$ mit dem Mittelpunkt verbunden ist;

Umschalter (T1, R7), die zwischen der Gleichstromquelle und der Zelle bei $\pi$ hintereinandergeschaltet sind;

eine Quelle einer Sägespannung ($V_s$) mit einer vorbestimmten Amplitude in Abhängigkeit von dem Verstärkungsgrad ($\omega$); und

Steuermittel, die einen Vergleicher mit zwei Eingängen aufweisen, wobei der eine Eingang mit der Sägespannung und der ander mit dem Ausgang der Addiermittel verbunden ist, wobei der Ausgang des Vergleichers des Ein- und Ausschalten der Umschalter steuert.

6. Teilnehmerschaltung nach Anspruch 5, dadurch gekennzeichnet, dass die Quelle der Sägespannung eine mit der Gleichstromquelle verbundene RC-Schaltung (R14, R16, C3, I2) aufweist.

7. Teilnehmerschaltung nach einem der Ansprüche 4 bis 6, dadurch gekennzeichnet, dass sie weiterhin Mittel zum Verbinden der Teilnehmerschaltung mit dem Vermittlungsnetz einschliesst, mit:

Ausgleichmitteln;

dritte Verstärker (A3), deren Eingang mit dem Vermittlungsnetz über die erste Einrichtungsleitung und deren Ausgang mit den Ausgleichmitteln (Z1, Z2) verbunden ist; und

vierte Verstärker (A4) mit zwei Eingängen, wobei der eine mit den Ausgleichmittel und der andere mit dem Mittelpunkt verbunden ist, wobei der Ausgang der vierten Verstärker mit dem Vermitlungsnetz über die zweite Einrichtungsleitung verbunden ist.

8. Teilnehmerschaltung nach einem der Ansprüche 5 bis 7, dadurch gekennzeichnet, dass sie weiterhin Mittel zur Synchronisation der Sägespannung mit dem vorbestimmten Tempo HF aufweist.

**Claims**

1. An interface circuit located between a telephone exchange (10) and a two-wire telephone line (16) connected to a subscriber's telephone, said line serving in particular to carry low-frequency voice signals from said exchange to said telephone and vice versa, said interface circuit including adaptation means for adjusting the impedances seen by the telephone line across the points where the line is connected to the exchange, said adaptation means including:

measurement means (Zs) connected to the telephone line for measuring variations of the current flowing therethrough,

first amplification means of gain A1($\omega$) connected to said measurement means and supplying an amplified signal,

addition means ($\Sigma 1$) connected to said first amplification means for adding said amplified signal to the low-frequency signal to be sent to said subscriber's telephone over said telephone line, and

second amplification means of gain A2($\omega$) connected to said addition means and driving said telephone line,

said interface circuit being characterized in that said gains A1($\omega$) and A2($\omega$) are chosen so as to cause said impedances seen by the telephone line to take on predetermined values as a function of frequency, said values being substantially proportional to the product A1($\omega$) . A2($\omega$).

2. An interface circuit as claimed in claim 1, further characterized in that:

said first and/or second amplification means include means for adjusting the gains thereof as a function of frequency (A'1, R19, C18, R18, C'18, R'18; C2, BB);

said gains A1(ω) and/or A2(ω) being chosen so that, for a given frequency range, the product A1(ω) . A2(ω) will be substantially proportional to at least one of said predetermined impedance values.

3. An interface circuit as claimed in claim 2, characterized in that said gain adjustment means allow the gains to be adjusted separately in the so-called telephone frequency bandwidth and in the range of frequencies lower than those in said bandwidth.

4. An interface circuit between a bi-directional telephone line (Lg) serving in particular to carry low-frequency voice signals, and a telephone switching network (SW) connected to said interface circuit via a first (20) and a second (18) unidirectional lines, said interface circuit including means for adjusting the impedance (Z$_T$) seen by said telephone line, and including:

a high-frequency transformer (Tr) having a primary with two end terminals and a center tap K, and a secondary (N2);

means for connecting said secondary to said unidirectional line through a rectifier circuit (DET);

means for respectively connecting the end terminals of said primary to a first and a second switches which alternately open and close at a predetermined high-frequency;

a load of impedance Z$_s$ connecting said switches to ground;

first amplification means of gain A1(ω) and which is connected to said load;

addition means (Σ1) connected to said first amplification means and to said first unidirectional line (20);

second amplification means of gain A2(ω) and which is connected to said addition means and feeds said center tap; and

means for connecting said center tap to said second unidirectional line (18);

said interface circuit being characterized in that said gains A1(ω) and A2(ω) varying as a function of frequency can be adjusted so that the product A1(ω) . A2(ω) will be substantially proportional to Z$_T$ in a predetermined frequency range.

5. An interface circuit as claimed in claim 4, characterized in that said second amplification means includes:

a DC voltage source (Vo);

a π-cell whose horizontal leg comprises an inductor (L) and whose vertical legs comprise a diode (D1) and a capacitor (C2), respectively, said π-cell being connected to said center tap;

switching means (T1, R7) connected in series between said DC voltage source and said π-cell;

a sawtooth voltage source (Vs) having a predetermined amplitude as a function of gain A2(ω); and

control means comprising a dual-input comparator one of whose inputs in connected to said sawtooth voltage source and whose other input is connected to the output of said addition means, with said switching means closing or opening under control of the output from said comparator.

6. An interface circuit as claimed in claim 5, characterized in that said sawtooth voltage source includes an R—C circuit (R14, R16, C3, I2) connected to said DC voltage source.

7. An interface circuit as claimed in any one of claims 4 to 6, characterized in that it further includes means for connecting the interface circuit to the switching network, including:

balancing means,

third amplification means (A3) whose input is connected to the switching network via said first unidirectional line and whose output is connected to said balancing means (Z1, Z2); and

fourth dual-input amplification means (A4) one of whose inputs is connected to said balancing means and whose other input is connected to said center tap, with the output of said fourth amplification means being connected to said switching network via said second unidirectional line.

8. An interface circuit as claimed in any one of claims 5 to 7, characterized in that it further includes means for synchronizing said sawtooth voltage and said predetermined high frequency.

# FIG.1

# FIG.4

# FIG. 2

# FIG.3

FIG.5

FILTRE HF — DET — Tr — N2 — N1 — K

Ren Kα
C en μF } SAUF INDICATION CONTRAIRE

Components: L 1mH, R24 39Ω, R7, C34, zener, T1, D1, R20 4,99, C32, COMP, R14 64,9, C20, 390pF, C3, R16 16,9, I2, A'1, A4, A3, R22 88,7, +V0 88,7, V0, R26 20,0, R30 20,0, C30, R19, C2 47nF, K'', K', Z S, C'18 680nF, R'18 5,62, C18 40nF, R18 2,0, BB, R40, R42, R44 47nF, IC40, R46 0,634, C42 10nF, 1nF

VERS SW

CK, F, Q, Q̄

BB — 20 — 18

4